## Europäisches Patentamt
## European Patent Office
## Office européen des brevets

(11) Veröffentlichungsnummer: **0 112 959**
**B1**

(12) **EUROPÄISCHE PATENTSCHRIFT**

(45) Veröffentlichungstag der Patentschrift:
12.07.89

(51) Int. Cl.⁴: **F 16 J 15/32**

(21) Anmeldenummer: **83103853.4**

(22) Anmeldetag: **20.04.83**

(54) **Dichtung.**

(30) Priorität: **08.12.82 DE 3245338**

(43) Veröffentlichungstag der Anmeldung:
**11.07.84 Patentblatt 84/28**

(45) Bekanntmachung des Hinweises auf die Patenterteilung:
**12.07.89 Patentblatt 89/28**

(84) Benannte Vertragsstaaten:
**AT BE CH DE FR GB IT LI LU NL SE**

(56) Entgegenhaltungen:
**EP-A-0 052 689**
**EP-A-0 104 504**
**DE-A-2 102 568**
**DE-A-3 016 231**
**FR-A-2 030 747**
**GB-A-860 090**

(73) Patentinhaber: **Firma Carl Freudenberg, Höhnerweg 4, D-6940 Weinheim/Bergstrasse (DE)**

(72) Erfinder: **Blesing, Dieter, Im Klingen 9, D-6149 Fürth 4 (DE)**
Erfinder: **Habel, Erich, Alfred- Delp- Strasse 2, D-6149 Fürth (DE)**
Erfinder: **Walther, Hans- Jürgen, Auf der Entenweide 8, D-6944 Hemsbach (DE)**

(74) Vertreter: **Weissenfeld- Richters, Helga, Dr., Höhnerweg 2, D-6940 Weinheim/Bergstrasse (DE)**

EP 0 112 959 B1

## Beschreibung

Die Erfindung betrifft eine Dichtung für die in radialer Richtung geöffnete Nute eines ruhenden Maschinenteiles gegenüber einem axial verschiebbaren Maschinenteil, bestehend aus einem elastisch nachgiebigen Ringkörper und gegebenenfalls einem Backring, wobei der Ringkörper ein im wesentlichen rechteckig begrenztes Profil aufweist, das druckseitig zu einer an dem Nutgrund anliegenden, statisch wirkenden ersten Dichtlippe mit einer Dichtkante verlängert ist sowie zu einer dynamisch wirkenden, zweiten Dichtlippe, die an dem axial verschiebbaren Maschinenteil mit einer zweiten Dichtkante anliegt.

Eine solche Dichtung ist aus der EP-A-0 052 689 bekannt. Sie dient zur Abdichtung von hin- und hergehenden Kolbenstangen oder Kolben gegenüber einer druckbeaufschlagten Flüssigkeit, und weist Dichtlippen auf, die ebenso wie die darin befindlichen Dichtkanten einen im wesentlichen übereinstimmenden Abstand von der zugeordneten Stirnfläche der aufnehmenden Nute aufweisen. Bei einer Tandemanordnung entsprechender Dichtungen wird ein Druckaufbau im Zwischenraum zwischen den einzelnen Dichtungen beobachtet. Ein vorzeitiger Ausfall kann hiervon die Folge sein.

Aus der GB-A-860 090 ist eine ähnliche Dichtung bekannt, bei der die beiden Dichtlippen so ausgebildet sind, daß die statische Dichtlippe einen größeren axialen Abstand von der zugeordneten Stirnfläche der Nute aufweist als die dynamisch wirkende, zweite Dichtlippe. Die Dichtkanten sind bei dieser Ausführung jeweils am Ende der Dichtlippen angeordnet. Das mit der Dichtung erzielte Abdichtungsergebnis ist wenig befriedigend.

Der Erfindung liegt die Aufgabe zugrunde, einen Nutring der eingangs genannten Art derart weiterzuentwickeln, daß die genannten Nachteile nicht mehr auftreten. Neben einer verminderten Leckage soll insbesondere ein Druckaufbau zwischen den einzelnen Dichtungen vermieden werden, wenn diese in einer Tandemanordnung angeordnet sind. Diese Aufgabe wird erfindungsgemäß mit einer Dichtung der eingangs genannten Art gelöst, die die kennzeichnenden Merkmale von Anspruch 1 aufweist. Auf vorteilhafte Ausgestaltungen nehmen die Unteransprüche Bezug.

Bei der vorgeschlagenen Ausführung hat die statisch wirkende, erste Dichtlippe einen größeren axialen Abstand von der zugeordneten Stirnfläche der Nute als die dynamisch wirkende, zweite Dichtlippe. Die Differenz beträgt bei üblichen Ausführungen im Durchmesserbereich von 20 bis 150 mm 0,5 bis 1,5 mm. Hierdurch wird bei einer Bewegung des dynamisch abgedichteten Maschinenteiles in Richtung der Dichtlippen eine Kippbewegung des Profils des Nutringes ausgelöst, derart, daß die von den Dichtlippen abgewandte Seite der Dichtung von dem relativ bewegten Maschinenteil abgehoben wird. Dadurch ergibt sich eine Druckentlastung. Von der Kolbenstange mitgeschleppte und in dem Zwischenraum zu einer weiteren Dichtung gegebenenfalls angestaute Leckflüssigkeit kann dadurch in einem wesentlich verbesserten Maße unter der Dichtkante hindurch zurückgeführt werden in den abgedichteten Raum, wo sie für ein weiteres Arbeitsspiel zur Verfügung steht. Bei mehrfach hintereinander angeordneten Nutringen ergibt sich zugleich eine Entlastung des Zwischenraumes, was günstige Betriebsverhältnisse für das nachfolgende Arbeitsspiel gewährleistet.

Die die statische Abdichtung bewirkende, erste Dichtkante hat zusätzlich einen kleineren axialen Abstand von der zugeordneten Stirnfläche der Nute als die die dynamische Abdichtung bewirkende, zweite Dichtkante. Für die Erzielung einer besonders geringen Leckage ist das von Vorteil.

Der Kippeffekt der vorschlagsgemäßen Dichtung läßt sich begünstigen durch ein Profil der Nute, das den Nutring mit Ausnahme im Bereich der Dichtkanten allseitig in einem Abstand umgibt. Auch in axialer Richtung ergibt sich dadurch innerhalb der Nute eine begrenzte Verschiebbarkeit, die während des Arbeitshubes eine Spaltbildung zwischen der dynamisch abgedichteten Dichtlippe und der zugewandten Stirnfläche der Nute zur Folge hat. Die Neutralisierung des Flüssigkeitsdruckes zwischen dem von den Dichtlippen und der genannten Stirnfläche umschlossenen Ringraum und dem Arbeitsraum zu Beginn eines jeden Arbeitstaktes wird hierdurch begünstigt. Ein vollkommener Ausgleich auch bei entgegengesetzter Relativbewegung wird erzielt, wenn die zweite Dichtlippe druckseitig vor der Dichtkante von mindestens einem sich in radialer Richtung erstreckenden Kanal durchbrochen ist.

Sind mehrere Kanäle vorhanden, sollten diese möglichst gleichmäßig auf dem Umfang verteilt werden. Die Kanäle können U-förmig in axialer Richtung geöffnet sein oder durch die Zwischenräume sich in axialer Richtung erstreckender Noppen mit in einer gemeinsamen radialen Ebene endenden Begrenzungsflächen, die in diesem Falle in ihrer Gesamtheit die Stirnfläche bilden.

Das Kippen des Profils der vorgeschlagenen Dichtung in Abhängigkeit von der Bewegungsrichtung des dynamisch abgedichteten Maschinenteils bedingt somit einen Ventileffekt, der eine weitgehende Unterbrechung des Flüssigkeitsstromes bei einer Bewegung in Arbeitsrichtung und zugleich eine maximale Durchlässigkeit bei einer Bewegung entgegen der Arbeitsrichtung gewährleistet. Der Effekt läßt sich erzielen durch Verwendung von Nutringen mit in axialer Richtung gleichlangen Dichtlippen, wenn die diesen zugewandte Stirnfläche der Nute durch eine Stufe unterbrochen ist und im Bereich der dynamisch wirkenden Dichtlippe einen kleineren axialen Abstand aufweist als im Bereich der statisch wirkenden Dichtlippe. Rechteckig begrenzte Nuten mit sich in radialer Richtung erstreckenden Stirnflächen lassen sich demgegenüber erheblich einfacher herstellen, und solche Ausführungen werden aus diesem Grunde bevorzugt in Verbindung mit einer Dichtung, bei der die dynamisch wirkende Dichtlippe die statisch wirkende Dichtlippe in axialer Richtung im erforderlichen Maße überragt.

Der Gegenstand der vorliegenden Erfindung wird nachfolgend anhand der in der Anlage beigefügten Zeichnungen näher erläutert. Es zeigen:

Figur 1:   Eine Ausführung zur Verwendung in einer rechteckig profilierten Nute, bei der die beiden Dichtkanten eine identische, axiale Lage haben.

Figur 2:   Eine Ausführung zur Verwendung in einer Nute mit abgestufter Stirnfläche, bei der die Dichtkante der statisch wirkenden Dichtlippe axial um das Maß A hinter der Dichtkante der dynamisch wirkenden Dichtlippe angeordnet ist.

Figur 3:   Eine Ausführung zur Verwendung in einer Nute mit abgestufter Stirnfläche, bei der die Dichtkante der statisch wirkenden Dichtlippe um das Maß A axial vor die Dichtkante der dynamisch wirkenden Dichtlippe vorgezogen ist.

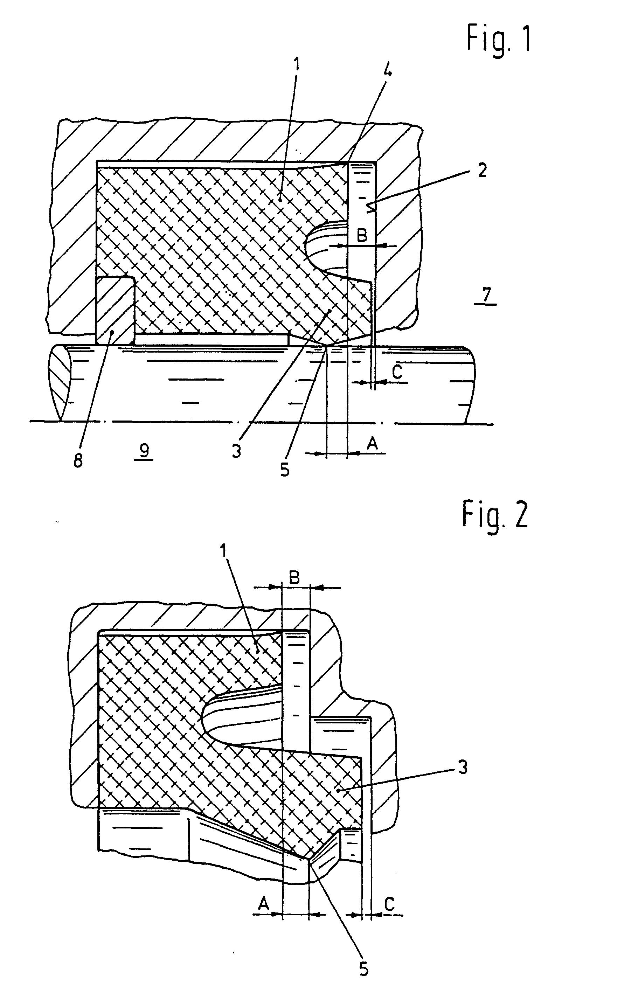

Figur 1 zeigt eine Dichtung zur Verwendung im Spalt zwischen einer Kolbenstange und einem aufnehmenden Gehäuse. Die Dichtung besteht aus einem gummielastischen Werkstoff und hat ein im wesentlichen rechteckig begrenztes Profil, das in Richtung des abzudichtenden Mediums auf der Außenseite durch eine statisch wirkende Dichtlippe 1 erweitert ist, auf der Innenseite durch eine dynamisch wirkende Dichtlippe 3. Die statisch wirkende Dichtlippe liegt mit einer umlaufenden Dichtkante 4 unter einer elastischen Vorspannung an der sich in axialer Richtung erstreckenden Begrenzungsfläche der Nute an, die dynamisch wirkende Dichtkante 5 unter einer elastischen Vorspannung an der sich betriebsbedingt hin- und herbewegenden Kolbenstange 9. Der abzudichtende Raum ist mit 7 bezeichnet, und der Druck des abzudichtenden Mediums bewirkt während des Arbeitstaktes zugleich eine Anpressung der statisch und der dynamisch wirkenden Dichtlippe an die zugeordneten Maschinenteile. Dabei kann sich zugleich eine axiale Zusammenpressung der Dichtung ergeben, und Materialaustrieb im Dichtspalt wird in diesem Falle durch den Backring 8 aus einem zähen und harten Werkstoff verhindert. Der Abstand 6 der statisch wirkenden Dichtlippe von der zugeordneten Stirnfläche der Nute ist größer als der Abstand C der dynamisch wirkenden Dichtlippe. Diese schlägt dadurch bei einer Richtungsumkehr der Kolbenstange 9 zu einem früheren Zeitpunkt an der zugeordneten Stirnwand 2 der Nute an als die statisch wirkende Dichtlippe, und eine Kippbewegung des Dichtringes um sein Profil nach links ist die Folge. Von der Kolbenstange während des Arbeitstaktes nach links mitgeführte Flüssigkeit kann hierdurch unter der Dichtkante 5 hindurch in den abgedichteten Raum 7 gefördert werden, wo es für eine erneute Verwendung zur Verfügung steht.

Die Ausführung nach Figur 2 entspricht in ihrer Funktion der vorstehend geschilderten, jedoch überragt die Dichtkante 5 der dynamisch wirkenden Dichtlippe 3 die Dichtkante der statisch wirkenden Dichtlippe 1 in axialer Richtung um ein positives Maß. Der axiale Abstand der statisch wirkenden Dichtlippe ist auch in diesem Falle größer als der axiale Abstand der dynamisch wirkenden Dichtlippe von der zugeordneten, sich in radialer Richtung erstreckenden Stirnfläche der Nute.

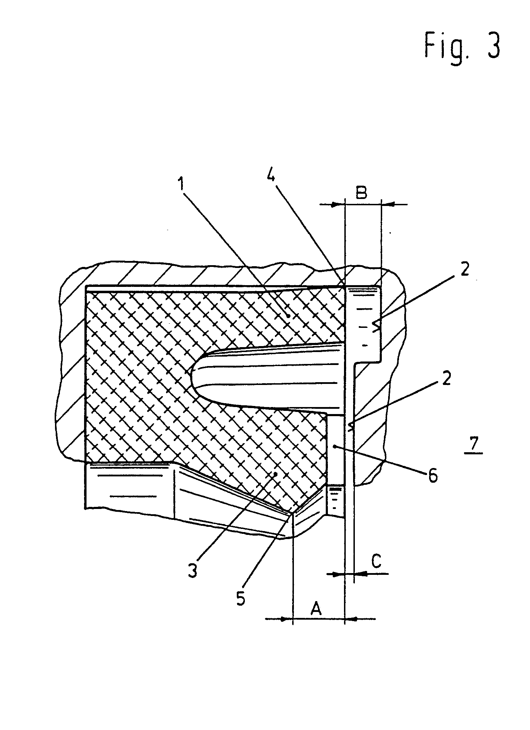

Die Ausführung nach Figur 3 entspricht in ihrer Funktion derjenigen nach Figur 1, jedoch überragt in diesem Falle die Dichtkante 4 der statisch wirkenden Dichtlippe 1 die Dichtkante 5 der dynamisch wirkenden Dichtlippe 3 um ein positives Maß. Die Kippbewegung, die insbesondere bei Tandemanordnungen störend sein kann, wird hierdurch begünstigt. Der zwischen den beiden Dichtlippen und der zugeordneten, abgestuften Stirnfläche der Nute eingeschlossene Ringraum steht durch eine sich in radialer Richtung erstreckende Nute 6 in unmittelbarer Verbindung mit dem abgedichteten Raum 7. Eine Druckabsenkung wirkt sich daher unmittelbar auf den Ringraum aus, was das Abheben der Dichtkante 5 von der Oberfläche der nicht dargestellten Kolbenstange bei einer Richtungsumkehr ebenfalls begünstigt. Der axiale Abstand B der statisch wirkenden Dichtlippe von dem zugeordneten Stirnwandbereich ist auch in diesem Falle größer als der axiale Abstand C der dynamisch wirkenden Dichtlippe. Anstelle des die Dichtlippe 3 in radialer Richtung durchbrechenden Kanals ist es bei einer solchen Ausführung selbstverständlich auch möglich, eine oder mehrere wirkungsgleiche Durchtrittsöffnungen in der Stirnwand 2 anzubringen. Das vorgeschlagene Funktionsprinzip ist in diesem Falle unter Verwendung üblicher Nutringe zu realisieren.

**Patentansprüche**

1. Dichtung für die in radialer Richtung geöffnete Nute eines ruhenden Maschinenteiles gegenüber einem axial verschiebbaren Maschinenteil (9), bestehend aus einem elastisch nachgiebigen Ringkörpern (1) und gegebenenfalls einem Backring (8), wobei der Ringkörper ein im wesentlichen rechteckig begrenztes Profil aufweist, das druckseitig zu einer an dem Nutgrund anliegenden, statisch wirkenden ersten Dichtlippe mit einer ersten Dichtkante (4) verlängert ist sowie zu einer dynamisch wirkenden, zweiten Dichtlippe, die an dem axial verschiebbaren Maschinenteil mit einer zweiten Dichtkante (5) anliegt, dadurch gekennzeichnet, daß die statisch wirkende erste Dichtlippe (1) einen größeren axialen Abstand von der zugeordneten Stirnfläche (2) der Nute aufweist als die dynamisch wirkende, zweite Dichtlippe (3) und daß die erste Dichtkante (4) einen kleineren axialen Abstand von der zugeordneten Stirnfläche (2) der Nute aufweist als die zweite Dichtkante (5).

2. Dichtung anch Anspruch 1, dadurch gekennzeichnet, daß die zweite Dichtlippe (3) druckseitig vor der Dichtkante (5) von mindestens einem sich in radialer Richtung erstreckenden Kanal (6) durchbrochen ist.

3. Dichtung nach Anspruch 1 bis 2, dadurch gekennzeichnet, daß die zweite Dichtlippe (3) eine geringere axiale Länge aufweist als die erste Dichtlippe (1).

## Claims

1. A seal for the grooves, opened in radial direction, of a stationary machine part with respect to an axially displaceable machine part (9), composed of a resiliently compliant annular body (1) and, if appropriate, a backing ring (8), the annular body having an essentially rectangularly limited profile, which is extended on the pressure side into a statically acting first sealing lip, having a first sealing edge (4) and bearing against the bottom of the groove, as well as into a dynamically acting, second sealing lip, which bears against the axially displaceable machine part with a second sealing edge (5), characterized in that the statically acting first sealing lip (1) has a larger axial distance from the assigned end face (2) of the grooves than the dynamically acting, second sealing lip (3) and in that the first sealing edge (4) has a smaller axial distance from the assigned end face (2) of the grooves than the second sealing edge (5).

2. A seal according to claim 1, characterized in that the second sealing lip (3) has at least one radially extending channel (6) passing through it on the pressure side ahead of the sealing edge (5).

3. A seal according to either of claims 1 or 2, characterized in that the second sealing lip (3) has a smaller axial length than the first sealing lip (1).

## Revendications

1. Joint pour la rainure, ouverte en direction radiale, d'une pièce de machine fixe par rapport à une pièce de machine (9) pouvant se déplacer axialement, constitué d'un corps annulaire (1) élastique et flexible et, éventuellement, d'une bague d'arrêt (8) dans lequel le corps annulaire présente un profil essentiellement rectangulaire qui est prolongé du côté de la pression par un premier bord d'étanchéité (4) à action statique et appuyant sur le fond de la rainure, ainsi que par une seconde lèvre d'étanchéité à action dynamique qui appuie sur la pièce de machine pouvant se déplacer axialement, caractérisé en ce que la première lèvre d'étanchéité (1) à action statique présente une plus grande distance axiale par rapport à la surface frontale correspondante (2) de la rainure que la seconde lèvre d'étanchéité (3) à action dynamique, et en ce que le premier bord d'étanchéité (4) présente une plus petite distance axiale par rapport à la surface frontale correspondante (2) de la rainure que le second bord d'étanchéité (5).

2. Joint selon la revendication 1, caractérisé en ce que la seconde lèvre d'étanchéité (4) est traversée, du côté de la pression et avant le bord d'étanchéité (5), par au moins un canal (6) s'étendant en direction radiale.

3. Joint selon les revendications 1 et 2, caractérisé en ce que la seconde lèvre d'étanchéité (3) présente une plus faible longueur axiale que la première lèvre d'étanchéite (1).

Fig. 1

Fig. 2

Fig. 3